Europäisches Patentamt

European Patent Office

Office européen des brevets

(11) Veröffentlichungsnummer: **0 063 622**
**B1**

(12) **EUROPÄISCHE PATENTSCHRIFT**

(45) Veröffentlichungstag der Patentschrift: **02.03.88**

(51) Int. Cl.⁴: **C 05 F 11/00**

(21) Anmeldenummer: **81103094.9**

(22) Anmeldetag: **24.04.81**

(54) **Aufbereitungsmittel für land- und forstwirtschaftliche Böden.**

(43) Veröffentlichungstag der Anmeldung:
**03.11.82 Patentblatt 82/44**

(45) Bekanntmachung des Hinweises auf die
Patenterteilung:
**02.03.88 Patentblatt 88/09**

(84) Benannte Vertragsstaaten:
**AT BE CH DE FR GB IT LI LU NL SE**

(56) Entgegenhaltungen:
DE-C- 868 912
FR-A- 341 333

CHEMICAL ABSTRACTS, Band 83, Nr. 21, 21.
November 1975, Seite 292, Zusammenfassung
175459x Columbus, Ohio, US H.M. QUAZI
"Effect of cultivar and season on the
concentration of saponins in lucerne
(Medicago sativa)"

CHEMICAL ABSTRACTS, Band 84, Nr. 15, 12.
April 1976, Seite 119, Zusammenfassung
100135a Columbus, Ohio, US L.S.
MARKOSYAN et al. "Effect of saponins on the
growth of microorganisms"

(73) Patentinhaber: **Dr. H. Schmittmann GmbH
Langenhorster Str. 30
D-5620 Velbert 1 (DE)**

(72) Erfinder: **Wustinger, Horst
Vogelweiderstrasse Nr.94
A-4600 Wels (AT)**

(74) Vertreter: **Patentanwälte Dr. Solf & Zapf
Zeppelinstrasse 53
D-8000 München 80 (DE)**

(56) References cited:
CHEMICAL ABSTRACTS, Band 78, Nr. 25, 25.
Juni 1973, Seite 50, Zusammenfassung
155106y Columbus, Ohio, US S.A.
VICHKANOVA et al. "Antimicrobial
preparations of saponins"

CHEMICAL ABSTRACTS, Band 91, Nr, 21, 19.
November 1979 Seite 565, Zusammenfassung
174096e Columbus, Ohio, US D.A. WELCH et al.
"Growth and composition of alfalfa fertilized in
greenhouse trials with deproteinized juice
from low and high saponin alfalfa and from oat
herbage"

## Beschreibung

Die Erfindung betrifft die Verwendung eines Mittels, das neben Wasser Saponin oder ein Saponin in wirksamer Form enthaltendes Produkt enthält, als Aufbereitungsmittel für land- und forstwirtschaftliche Böden.

Ein Mittel, das Wasser und Saponin enthält, ist an sich bereits z.B. aus der Literaturstelle "Chemical Abstracts, Bd. 79, Nr. 2, Juli 1983, Seite 269, Zusammenfassung 9561x" bekannt. Für die erfindungsgemäße Verwendung als Aufbereitungsmittel erhält der Fachmann aus dieser Veröffentlichung jedoch keine Hinweise.

Die Literaturstelle "Chemical Abstracts, Bd. 91, Nr. 21, 19.11.1979, Seite 565, Zusammenfassung 174096e" beschreibt das Wachstum und die Zusammensetzung von Alfalfa, das in Gewächshaus-Versuchen mit einem deproteinisierten Saft aus einem "low and high saponin alfalfa" gedüngt wurde, was jedoch nicht besagt, daß der Saft selbst Saponin enthält. Diese Veröffentlichung erteilt dem Fachmann lediglich die Lehre, daß die bei den beschriebenen Experimenten auftretenden Beeinträchtigungen nicht auf das Konto von Saponin gehen, d.h. daß Saponin für auftretende Wachstumsmängel nicht verantwortlich ist. Diese Aussage beinhaltet jedoch keine Anregung, Saponin für einen bestimmten Zweck zu verwenden, insbesondere nicht als Aufbereitungsmittel für land- und forstwirtschaftliche Böden.

Gegenstand der Erfindung ist also die Verwendung eines Mittels, das Saponin, Saponine oder ein Saponin in wirksamer Form enthaltendes Produkt enthält, als Bodenaufbereitungsmittel. Das Saponin in wirksamer Form enthaltende Produkt kann ein Zwischenprodukt zur Herstellung handelsüblicher Saponinextraktprodukte sein. Vorzugsweise können monodesmosidische Saponine aus z.B. Quillajarinde, Seifenwurzeln, Spinat, Guyak, Yuka, Roßkastanien, Rüben verwendet werden.

Saponine sind eine Gruppe von Glykosiden, die sich durch eine Reihe von gemeinsamen Merkmalen auszeichnen. Es sind pflanzliche Stoffe, die in Wasser gelöst die Oberflächenspannung beeinflussen und ähnlich wie Seife beim Schütteln einen haltbaren Schaum liefern. Sie bestehen aus Kohlenstoff, Wasserstoff und Sauerstoff und weisen ein hohes Molekulargewicht auf. Als Inhaltsstoffe vieler Pflanzen sind die Saponine in der Natur weit verbreitet. Man nimmt an, daß sie als Bitterstoffe eine gewisse Schutzfunktion der Pflanze gegenüber bestimmten Parasiten aufweisen. Ihre Gewinnung erfolgt durch auf die Droge abgestimmte Extraktions- und Aufbereitungsverfahren. Der Abschluß des Verarbeitungsprozesses ist im allgemeinen die Überführung der Extrakte in die Pulverform. In dieser Form gelangen die Saponine in den Handel. In Fällen, in denen es nicht möglich ist, die Saponinextrakte in die Pulverform zu überführen, werden diese in einer stark konzentrierten, flüssigen, meist konservierten Form angeboten. Die aus verschiedenen saponinhaltigen Drogen gewonnenen Saponine unterscheiden sich mehr oder weniger untereinander. Eine chemische Unterscheidung wird anhand ihres zuckerfreien Grundgerüstes, des sogenannten Aglykons oder auch Sapogenins, getroffen. Die zwei großen dabei zu unterscheidenden Gruppen sind:

1. Sapogenine mit Triterpenstruktur (Oleanolsäure-Grundgerüst)
2. Spirostanole (Steranskelett-Digitogenin) Saponine sind als Heilmittel und Waschmittel hoch begehrt. Heute hat sich die Anwendung von Saponin mehr auf andere Gebiete verlagert. Beispielsweise wird Saponin aus Quillaja-Saponaria gewonnen. Es ist ein auf besonderem Wege gereinigter und in Pulverform überführter hochwertiger, in Wasser in jedem Verhältnis löslicher Drogenextrakt. Das im Saponinanteil benannte Hauptsaponin, Quillaja-Saponin, ist ein Glykosid, dessen Aglykon als Triterpenoid der β-Amyrin-Oleanolsäure-Gruppe angehört. Die bei der Hydrolyse abgespaltenen Zucker sind bisher im einzelnen nicht bekannt. Quillaja-Saponin wirkt hämolytisch. Das Pulver reizt beim Einatmen die Schleimhäute. Es wird hauptsächlich zur Herstellung von Filmemulsionen verwendet und ist frei von Härtebildnern und Schwermetallen. Als Pulver ist es weiß bis fast weiß und außer in Wasser in Dioxan löslich. Die 5%ige wässrige Lösung hat einen ph-Wert zwischen 4 und 5.

Die Haltbarkeit der Saponinlösung beträgt im offenen Gefäß und bei einer Außentemperatur von 15 Grad Celsius durchschnittlich drei bis fünf Tage. Die Haltbarkeit verlängert sich bei Temperaturen unter 10 Grad Celsius und wird geringer oberhalb 20 Grad Celsius. Die Haltbarkeit der Lösung kann durch Aufbewahren in Kühlräumen, Aufkochen und Aufbewahren in verschlossenen Behältern, Zugabe von Äthylalkohol bis zu 18 % und Zugabe von Konservierungsmitteln verlängert werden. Die Einarbeitung von Konservierungsmitteln verändert jedoch die natürliche Zusammensetzung der Lösung erheblich.

Gypsophila-Saponin wird aus Radix-Saponaria in der Regel ebenfalls als in Pulverform überführter Drogenextrakt gewonnen. Es ist — ebenso wie das Quillaja-Saponin — zur Herstellung von Film- und Fotopapieren verwendbar und weist dabei etwa die gleichen Eigenschaften auf. Darüber hinaus findet es hauptsächlich Verwendung als Netzmittel, in der kosmetischen, galvanischen und Getränke-Industrie und wird zur Förderung der Aufnahme von Arzneien in der pharmazeutischen Industrie eingesetzt. Weitere Einsatzgebiete der Saponine sind in Abhängigkeit vom Reinheitsgrad die Lebensmittelindustrie, Lack- und Farbenindustrie, der Reprobereich, die Getränkeindustrie und die Verwendung zu Reinigungszwecken. In den meisten Fällen wird Saponin eingesetzt, um die Oberflächenspannung von Flüssigkeiten oder dergleichen zu beeinflussen.

Handelsübliche Saponinprodukte sind Saponinextraktlösungen, Saponinpulver und Granulate, die in der Regel einen Reinsaponingehalt von etwa 5 bis 30 Gew.-% aufweisen.

Aus den handelsüblichen Saponinprodukten werden verdünnte wässrige Lösungen hergestellt, die das Reinsaponin in Konzentrationen von 2 bis 5 ppm enthalten. Dieses Aufbereitungsmittel wird auf die zu behandelnden Böden oberflächlich verteilt, z.B. aufgesprüht oder aufgedüst oder aufgegossen oder dergleichen.

Das erfindungsgemäße Saponin enthaltende Aufbereitungsmittel verändert offenbar die Reaktionsbedingungen im Boden zugunsten des aeroben Bakterienwachstums derart, daß die aeroben Vorgänge schneller ablaufen als die anaeroben oder die anaeroben Vorgänge unterdrückt werden. Es ist derzeit nicht bekannt, worauf die unerwartete günstige Eigenschaft des neuen Aufbereitungsmittels zurückzuführen ist. Dabei lag es keineswegs nahe, Saponinprodukte als Aufbereitungsmittel zu verwenden, wenn man berücksichtigt, daß die Saponine in Lösungen durch Mikroorganismen rasch zersetzt werden und daher befürchtet werden mußte, daß das Saponin zumindest in den zugesetzten geringen Konzentrationen völlig unwirksam ist. Unter anderem ist zwar in der Literatur auch berichtet worden, daß Saponin auf die meisten Bakterien wachstumsfördernd wirkt. Überraschend ist jedoch, daß im Falle der Erfindung diese Wirkung offenbar selektiv zugunsten des Wachstums der aeroben Bakterien abläuft. Würde das Wachstum der aeroben und anaeroben Bakterien gleichermaßen gefördert, was der Fachmann hätte erwarten müssen und weshalb er Saponin bisher wohl auch nicht eingesetzt hat, so hätte sich lediglich eine Beschleunigung der bekannten Vorgänge mit den beschriebenen Nachteilen ergeben. Für den Durchschnittsfachmann ergibt sich aus dem Stand der Technik weder ein Hinweis, der die Verwendung von Saponin für die Zwecke der Erfindung nahegelegt hätte, noch kann angenommen werden, daß die Auswahl der Saponinprodukte aus einer Unzahl chemischer Produkte für den Durchschnittsfachmann ohne weiteres getroffen werden konnte.

Die Saponinlösung beschleunigt, wie bereits beschrieben, offenbar das aerobe Bakterienwachstum so stark, daß das anaerobe Bakterienwachstum, das unter normalen Bedingungen sehr viel schneller abläuft, zurückgedrängt wird oder erst einsetzt, wenn das aerobe Bakterienwachstum fast abgeschlossen ist, so daß für das anaerobe Bakterienwachstum kein Nährboden mehr vorhanden ist.

Besonders wirksam wird das aerobe Bakterienwachstum gefördert, wenn die verdünnte Saponinlösung einen Stoff enthält, der als Nährboden für Bakterien dient und/oder als Keimbildner für das Wachstum der Bakterien wirkt. Vorzugsweise sollten diese Stoffe das Wachstum der aeroben Bakterien fördern.

In überraschender Weise hat sich in diesem Zusammenhang ergeben, daß als Nährstoffe Produkte verwendbar sind, die bekanntermaßen als Nährstoffe sowohl für aerobe als auch für anaerobe Bakterien gelten; dennoch wird bei der erfindungsgemäßen Verwendung des Aufbereitungsmittels überwiegend nur das Wachstum der aeroben Bakterien durch die Nährstoffe gefördert. Diese Tatsache kann lediglich mit einem synergistischen Effekt begründet werden, der sich im Zusammenwirken mit dem Saponinprodukt ergibt. In besonderem Maße beschleunigt Melasse das aerobe Bakterienwachstum. Verwendbar sind z.B. aber auch Rohrzucker oder Lösungen anderer Zuckerprodukte. Ferner können z.B. Gelatine, Stärke oder Malzprodukte zugesetzt werden. Alle diese Stoffe bilden im Zusammenwirken mit der Saponinlösung eine Brutstätte für die aeroben Bakterien.

Zweckmäßig ist, dem verdünnten, Saponin und mindestens einen Bakteriennährstoff enthaltenden Aufbereitungsmittel ein wasserlösliches Hydrokolloid zuzusetzen, das insbesondere als Quell- und/oder Verdickungs- und/oder Thixotropierungsmittel wirkt. Dieses Mittel kann zweckmäßigerweise ein Aktivator für den Nährstoff sein. Bevorzugt werden in diesem Falle wasserlösliche Alginate, z.B. Natriumalginat oder pulverisierte, getrocknete Algen. Nach einer besonderen Ausführungsform der Erfindung wird ein Xanthan zugesetzt. Vorzugsweise wird Kelzan D verwendet.

Zweckmäßig ist ferner, wenn das Mittel, insbesondere das Bakteriennährstoffe enthaltende Aufbereitungsmittel ein an sich bekanntes Konservierungsmittel enthält, das verhindert, daß in dem Wasser enthaltenden Aufbereitungsmittel mikroorganische Prozesse ablaufen, bevor das Aufbereitungsmittel seiner bestimmungsgemäßen Verwendung zugeführt worden ist.

Vorzugsweise werden die bekannten zugelassenen Konservierungsmittel wie Sorbid, Sorbinsäure, Sorbate Benzeosäure oder Tylose, verwendet.

Das Aufbereitungsmittel wird als Konzentrat vorzugsweise in der folgenden Zusammensetzung zubereitet und in dieser Zubereitung gehandelt:

6 bis 20 Gew.-% Saponinextrakt (Reinsaponingehalt von 20 bis 30 Gew.-%),

40 bis 50 Gew.-% Nährstoff, vorzugsweise Melasse,

1 bis 6 Gew.-% Hydrokolloid,

0,1 bis 6 Gew.-% Konservierungsmittel,

Rest Wasser.

Diesem Konzentrat wird kurz vor der Verwendung Wasser zugesetzt, so daß das Konzentrat in Mengen von 2 bis 5 ppm im Wasser vorliegt. Das Produkt wird dann bestimmungsgemäß verwendet.

Neben der beschriebenen unerwarteten Wirkung des Saponins auf das aerobe Bakterienwachstum bedingt dessen Verwendung zudem den besonderen Vorteil, daß bekanntlich die Oberflächenspannung von insbesondere Wasser erheblich herabgesetzt und die Benetzbarkeit von Feststoffen erheblich erhöht wird. Diese Eigenschaft unterstützt die Wirkung der anderen Zusatzstoffe bzw. deren Verteilung im Boden sowie die Wirkung des Aufbereitungsmittels bei der Verwendung als Bodenverbesserungsmittel.

Die Erfindung zeigt somit im Vergleich zum Stand der Technik einen völlig anderen Weg auf, das aerobe gegenüber dem anaeroben Bakterienwachstum zu fördern, indem Stoffe zugesetzt werden, die vornehmlich auf das aerobe Bakterienwachstum positiv einwirken. Es handelt sich dabei im wesentlichen um Naturprodukte bzw. durch Fermentation oder Extraktion aus organischen Naturprodukten, vornehmlich Pflanzen, gewonnene Stoffe (Saponin, Melasse, Alginate).

Die überraschende hervorragende Wirkung des Aufbereitungsmittels ergibt sich insbesondere bei Verwendung in der folgenden Zusammensetzung:

8 Gew.-% Saponinextraktprodukt (30 Gew.-% Reinsaponin)

45 Gew.-% Melasse

2 Gew.-% Kelzan D

2 Gew.-% Konservierungsmittel (Sorbinsäure)

Rest Wasser.

Von diesem Produkt reichen drei Liter für einen Hektar. Hierzu wird das Gemisch mit Wasser im Verhältnis 1:1000 vermengt und mittels Sprühgerät gleichmäßig auf die gesamte Fläche aufgebracht. Dadurch soll das Bakterienwachstum gleichmäßig über den gesamten Bodenbereich verteilt angeregt werden. Neben der bodenauflockernden Wirkung erhöht das Aufbereitungsmittel die Wasserretention im Wurzelbereich des Bodens. Das bedeutet, daß Wasser und Düngemittel nicht an der oberen Schicht des Bodens verbleiben, sondern bis in Wurzeltiefe eindringen können und dort fixiert werden. Dadurch wird die Wurzelbildung gefördert und gleichermaßen der Ertrag des Bodens erhöht. Im Falle der Oberflächenverdunstung bleiben die Wirkstoffe des Aufbereitungsmittels im Boden. Auch Frost kann den Wirkstoffen nicht schaden. Die beste Wirkung des Aufbereitungsmittels tritt bei einer Bodentemperatur von mehr als 10 Grad Celsius ein, wobei jedoch eine Temperatur von 70 Grad Celsius nicht überschritten werden sollte. Die Verwendung des Aufbereitungsmittels ist nicht auf bestimmte Pflanzen beschränkt. Das Saponin scheint neben der Förderung des Bakterienwachstums und der Erhöhung der Benetzbarkeit der festen Stoffe auch die Permeabilität der Wurzeln zu erhöhen, so daß eine sehr komplexe Wirkung angenommen werden kann, die die Überlegenheit des anmeldungs gemäß verwendeten Aufbereitungsmittels gegenüber anderen Mitteln verursacht. Hinzu kommt, daß das Wasser und auch Luftsauerstoff besser in den Boden eindringen können, demzufolge die aerobe Bakterientätigkeit noch zusätzlich aktiviert wird. Die Auflockerung des Bodens führt zu einer besseren Wurzelbildung und erhöht die Nahrungsaufnahme der Pflanze, so daß sogar eine Ertragssteigerung je nach Bodenverhältnissen und Beschaffenheit bis zu 30 % bewirkt werden kann. Die Düngemittel Können tiefer — in den Bereich der Wurzeln — in den Boden eindringen. Fäulnis wird weitestgehend unterbunden, die Humusbildung wird gefördert.

Anstelle der angegebenen Verdünnung aus handelsüblichen Saponinendprodukten (Extrakte, Pulver) können auch die Ausgangs- und Zwischenprodukte (Rohstoffe), die sogenannten Drogen (natürliche saponinhaltige Pflanzenteile), verwendet werden, die zu den Extraktionsprodukten bzw. Pulvern des Saponins verarbeitet werden. Diese Stoffe führen zu einer Langzeitwirkung des erfindungsgemäßen Aufbereitungsmittels. Beispielsweise können Aufbereitungsmittel auf den zu behandelnden Boden aufgebracht werden, die zermahlene Quillajarinde oder Seifenwurzeln oder dergleichen Zwischenprodukte enthalten. Die Verwendung dieser Stoffe hat den Vorteil, daß die Extraktion des Saponins in situ, d.h. auf dem Boden erfolgt, wobei ein Quellen der Zwischenprodukte die Auflockerung des Bodens unterstützen kann. Die Zwischenprodukte nehmen bekanntlich bis zum Dreifachen des Ausgangsvolumens ein, wenn Feuchtigkeit auf sie einwirkt. Zweckmäßigerweise werden Drogen verwendet, die mindestens 0,5 bis 30 Gew.-% Reinsaponin enthalten.

Wesentlich und überraschend ist, daß durch die Wirkung des anmeldungsgemäß verwendeten Mittels die Fäulnis der Pflanzen weitestgehend verhindert werden kann.

**Patentansprüche**

1. Verwendung eines Mittels, das neben Wasser Saponin oder ein Saponin in wirksamer Form enthaltendes Produkt enthält, als Aufbereitungsmittel für land- und forstwirtschaftliche Böden.

2. Verwendung nach Anspruch 1, dadurch gekennzeichnet, daß das Mittel Reinsaponin in einer Menge von 2 bis 5 ppm in Wasser enthält.

3. Verwendung nach Anspruch 1 und/oder 2, dadurch gekennzeichnet, daß das Mittel einen Bakteriennährstoff enthält.

4. Verwendung nach Anspruch 3, dadurch gekennzeichnet, daß das Mittel als Bakteriennährstoff Melasse enthält.

5. Verwendung nach einem oder mehreren der Ansprüche 1 bis 4, dadurch gekennzeichnet, daß das Mittel ein wasserlösliches Hydrokolloid enthält.

6. Verwendung nach Anspruch 5, dadurch gekennzeichnet, daß das Mittel Kelzan D enthält.

7. Verwendung nach einem oder mehreren der Ansprüche 1 bis 6, dadurch gekennzeichnet, daß das Mittel ein Konservierungsmittel enthält.

8. Verwendung nach Anspruch 7, dadurch gekennzeichnet, daß das Mittel als Konservierungsmittel Sorbinsäure enthält.

9. Verwendung nach einem oder mehreren der Ansprüche 1 bis 8, dadurch gekennzeichnet, daß das Mittel die folgende Zusammensetzung aufweist:

6 bis 20 Gew.-% Saponinprodukt mit einer Konzentration von 20 bis 30 Gew.-% Reinsaponin,

40 bis 50 Gew.-% Melasse,

1 bis 6 Gew.-% wasserlösliches Hydrokolloid,

0,7 bis 6 Gew.-% Konservierungsmittel,

Rest Wasser.

10. Verwendung nach Anspruch 9, dadurch gekennzeichnet, daß das Mittel in einer wässrigen Verdünnung von 2 bis 5 ppm verwendet wird.

**Revendications**

1. Utilisation d'un agent qui, outre de l'eau, contient de la saponine ou un produit contenant de la saponine sous forme active, comme agent de traitement pour des sols agricoles et forestiers.

2. Utilisation selon la revendication 1, caractérisée en ce que l'agent contient de la saponine pure mêlée à l'eau dans une proportion de 2 à 5 ppm.

3. Utilisation selon la revendication 1 et/ou 2, caractérisée en ce que l'agent contient une substance nutritive pour bactéries.

4. Utilisation selon la revendication 3, caractérisée en ce que l'agent contient de la mélasse comme substance nutritive pour bactéries.

5. Utilisation selon une ou plusieurs des revendications 1 à 4, caractérisée en ce que l'agent contient un hydrocolloïde soluble dans l'eau.

6. Utilisation selon la revendication 5, caractérisée en ce que l'agent contient du Kelzan D.

7. Utilisation selon une ou plusieurs des revendications 1 à 6, caractérisée en ce que l'agent contient un agent de conservation.

8. Utilisation selon la revendication 7, caractérisée en ce que l'agent contient de l'acide sorbique comme agent de conservation.

9. Utilisation selon une ou plusieurs des revendications 1 à 8, caractérisée en ce que l'agent a la composition suivante:
— 6 à 20 % en poids de produit à base de saponine avec une proportion de saponine pure de 20 à 30 % en poids,
— 40 à 50 % en poids de mélasse,
— 1 à 6 % en poids d'hydrocolloïde soluble dans l'eau,
— 0,7 à 6 % en poids d'agent de conservation,
— le reste étant de l'eau.

10. Utilisation selon la revendication 9, caractérisée en ce que l'agent est utilisé sous forme de solution aqueuse à 2 à 5 ppm.

**Claims**

1. Use of an agent which in addition to water contains saponin or a product containing saponin in an active form, as a treatment agent for agricultural and forestry soils.

2. Use according to Claim 1, characterized in that the agent contains pure saponin in an amount of 2 to 5 ppm in water.

3. Use according to Claim 1 and/or 2, characterized in that the agent contains a bacterial nutrient.

4. Use according to Claim 3, characterized in that the agent contains molasses as a bacterial nutrient.

5. Use according to one or more of Claims 1 to 4, characterized in that the agent contains a water soluble hydrocolloid.

6. Use according to Claim 5, characterized in that the agent contains Kelzan D.

7. Use according to one or more of Claims 1 to 6, characterized in that the agent contains a preservative.

8. Use according to Claim 7, characterized in that the agent contains sorbic acid as a preservative.

9. Use according to one or more of Claims 1 to 8, characterized in that the agent has the following composition:
6 to 20% by weight of saponin product having a concentration of 20 to 30% by weight of pure saponin,
40 to 50% by weight of molasses,
1 to 6% by weight of water soluble hydrocolloid,
0.7 to 6% by weight of preservative,
remainder water.

10. Use according to Claim 9, characterized in that the agent is used in an aqueous dilution of 2 to 5 ppm.